# EUROPEAN PATENT SPECIFICATION

(11) **EP 3 812 107 B1**
(45) Date of publication and mention of the grant of the patent: **09.12.2026**
(21) Application number: 20201505.3
(22) Date of filing: 13.10.2020
(51) Int. Cl.: B25J 9/16, G06T 1/00, G06T 7/00, G06N 3/04, G06N 3/006, G06N 3/044, G06N 3/045, G06N 3/088, G06V 10/764, G06V 10/82, G06V 20/10, G06N 3/0442, G06N 3/0464, G06N 3/092, G06N 3/096, G06N 3/08, G06N 7/01

(54) **ROBOT CONTROL SYSTEM, AND METHOD AND PROGRAM FOR CONTROLLING A ROBOT**
ROBOTERSTEUERUNGSSYSTEM SOWIE VERFAHREN UND PROGRAMM ZUR STEUERUNG EINES ROBOTERS
SYSTÈME, PROCÉDÉ ET PROGRAMME DE COMMANDE DE ROBOT

(30) Priority: 21.10.2019 JP 2019192132
(43) Date of publication of application: 28.04.2021
(73) Proprietor: CANON KABUSHIKI KAISHA, OHTA-KU Tokyo 146-8501 (JP)
(72) Inventor: WADA, Yuki, Ohta-ku,, Tokyo 146-8501 (JP); TORIIHARA, Shigeru, Ohta-ku,, Tokyo 146-8501 (JP)
(74) Representative: TBK

(56) References cited:
- WO-A1-2018/146769
- US-A1- 2010 298 978
- US-A1- 2017 028 562
- US-A1- 2018 079 076
- US-A1- 2018 345 485
- US-A1- 2019 087 976
- US-A1- 2019 283 245
- US-A1- 2019 295 244
- US-A1- 2020 030 970
- US-A1- 2020 164 517
- SELVARAJU RAMPRASAATH R ET AL: "Grad-CAM: Visual Explanations from Deep Networks via Gradient-Based Localization", 2017 IEEE INTERNATIONAL CONFERENCE ON COMPUTER VISION (ICCV), IEEE, 21 March 2017 (2017-03-21), pages 618 - 626, XP033282917, DOI: 10.1109/ICCV.2017.74
- AKAL ORHAN ET AL: "A Distributed Sensing Approach for Single Platform Image-Based Localization", 2018 17TH IEEE INTERNATIONAL CONFERENCE ON MACHINE LEARNING AND APPLICATIONS (ICMLA), IEEE, 17 December 2018 (2018-12-17), pages 643 - 649, XP033502321, [retrieved on 20190115], DOI: 10.1109/ICMLA.2018.00103

## Description

### BACKGROUND OF THE INVENTION

### Field of the Invention

The present invention relates to a robot control system, and a method and a program for controlling a robot.

### Description of the Related Art

In the field of factory automation (FA), attention has been drawn to operation automation in a factory by using a robot arm. An example of a task in which a robot arm is used is a pick-and-place operation. To achieve the pick-and-place operation, a program for controlling the robot arm, referred to as teaching, needs to be created. The teaching is mainly a process of photographing a workpiece with a 2D or 3D camera, estimating a position and a shape by Computer Vision, and controlling the robot arm to be in a specific position and orientation (for example, Patent Document 1: Japanese Patent Laid-Open No. 2017-124450). Among these, estimating the position and the shape particularly requires trial and error, and thus requires man-hours. However, in an actual site of a factory, there are workpieces having various shapes, so the teaching needs to be performed for each workpiece, and a complex task, such as loading in bulk, makes the teaching more difficult. In recent years, there has been a technology in which AI is used for robot arm control due to the coming of the AI boom. An example is Non-Patent Document 1, "Learning Hand-Eye Coordination for Robotic Grasping with Deep Learning (Google)".

However, in Patent Document 1, position and orientation estimation is performed by matching of a 3D model, but a relatively expensive 3D camera needs to be used in order to acquire position and orientation information of a workpiece with high accuracy.
Document US 2018 079 076 A1 discloses a machine learning device, which learns an operation program of a robot, includes a state observation unit which observes as a state variable at least one of a shaking of an arm of the robot and a length of an operation trajectory of the arm of the robot; a determination data obtaining unit which obtains as determination data a cycle time in which the robot performs processing; and a learning unit which learns the operation program of the robot based on an output of the state observation unit and an output of the determination data obtaining unit.
Document US 2019 087 976 A1 discloses an information processing device including a camera and a processing circuit. The camera takes first distance images of an object for a plurality of angles. The processing circuit generates a three-dimensional model of the object based on the first distance image, and generates an extracted image indicating a specific region of the object corresponding to the plurality of angles based on the three-dimensional model.

### SUMMARY OF THE INVENTION

The present invention in its first aspect provides a robot control system as specified in claims 1-6.

The present invention in its second aspect provides a method of controlling a robot as specified in claim 7.

The present invention in its third aspect provides a computer program as specified in claim 8.

According to the present invention, by providing a neural network that can perform robot control from an input of a 2D video image, a predetermined operation can be performed by a robot with an intuitive and simple configuration.

Further features of the present invention will become apparent from the following description of exemplary embodiments (with reference to the attached drawings).

### BRIEF DESCRIPTION OF THE DRAWINGS

FIG 1 is a block diagram of a control device configured to perform learning of a neural network according to an embodiment.
FIG 2 is a block diagram of an actual robot, image capturing devices, and the control device configured to control them.
FIG 3 is a schematic view illustrating a configuration of a robot on a simulator or an actual robot
FIG 4A and FIG 4B are diagrams illustrating an example of an image captured by the image capturing device.
FIG. 5 is a schematic diagram illustrating a process of reinforcement learning to be performed by the robot according to the embodiment.
FIG. 6 is a diagram illustrating an example of occurrence conditions of rewards and the rewards to be obtained according to the embodiment.
FIG. 7A and FIG. 7B are flowcharts illustrating an operation in constructing a learning model according to the embodiment.
FIG. 8 is a schematic diagram of a model of the neural network according to the embodiment.
FIG. 9 is a schematic diagram of a model of the neural network according to the embodiment.
FIG. 10 is a flowchart of robot control based on a learned model according to the embodiment.
FIG. 11 is a schematic view illustrating a method of creating a heat map according to the embodiment.
FIG. 12 is a diagram illustrating an example of the heat map for each step according to the embodiment.

### DESCRIPTION OF THE EMBODIMENTS

Hereinafter, embodiments will be described in detail by referring to the accompanying drawings. Note that the following embodiments do not limit the invention according to the claims. Although a plurality of features is described in the embodiments, some of the plurality of features may not be essential to the invention, and the plurality of features may be arbitrarily combined. Further, in the accompanying drawings, identical or similar components are denoted by identical reference signs, and redundant description will be omitted.

In addition, Non-Patent Documents 2 to 5 to be cited in the embodiments are as follows.
Non-Patent Document 2: Asynchronous Methods for Deep Reinforcement Learning (DeepMind)
Non-Patent Document 3: Reinforcement learning with unsupervised auxiliary tasks (DeepMind)
Non-Patent Document 4: Grad-CAM: Visual Explanations from Deep Networks via Gradient-based Localization (Virginia Tech, Georgia Institute of Technology)
Non-Patent Document 5: Domain Randomization for Transferring Deep Neural Networks from Simulation to the Real World (OpenAI)

The two embodiments to be described below are common in terms of a basic configuration and execution of machine learning, but differ from each other in terms of environment to learn. Thus, outlines of these two embodiments will be described first.

In a first embodiment, a robot control system will be described that performs robot control by performing learning of a neural network on a simulator on a computer and applying the learned model to an actual robot. Since the simulator can be operated faster than the actual robot, learning can be converged quickly.

In a second embodiment, a robot control system that performs learning of a neural network on an actual robot will be described. While the use of the simulator in the first embodiment has an advantage that the learning can be speeded up, a contrivance is needed that fills a difference between the simulator and the actual robot when the learned model learned by the simulator is applied to the actual robot. The learning can be performed on the actual robot to eliminate a difference in environment between in learning and in performing inference.

The outlines of the two embodiments have been described above. Each of the embodiments will now be described in detail. Note that redundant descriptions of parts common to the respective embodiments will be omitted.

### First Embodiment

In the first embodiment, a process of constructing and using a learning model in a picking operation until a robot arm moves from an initial state and grips a workpiece will be described. The operation after the gripping is not particularly limited, but examples thereof include movement to another location, alignment, and inspection. The operation after the gripping may be implemented in a configuration using a neural network to be described hereinafter, or may perform movement and alignment by motion planning.

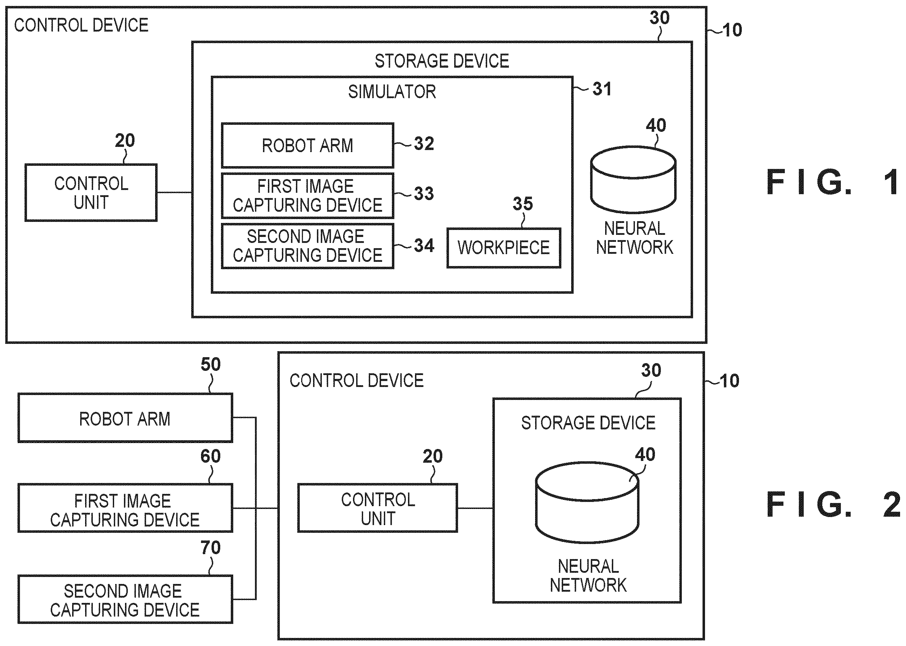

FIG. 1 is a block diagram of a control device that performs learning of a neural network. Examples of a control device 10 include a PC, or a server. A reference sign 30 denotes a storage device, which is an auxiliary storage device such as a hard disk drive (HDD) storing various control programs such as application software or an operating system (OS), a main storage device such as a random access memory (RAM) for storing data to be temporarily required in order to execute a program, and the like. A control unit 20 includes an arithmetic processing unit such as a central processing unit (CPU). In addition, since a calculation amount associated with the learning is large, for example, a graphics processing unit (GPU) may be installed. A simulator 31 is a physical simulator, can reproduce physical phenomena on a computer, and is installed in the storage device 30 as application software. The higher the simulation accuracy is, the more the calculation amount is required, which affects a speed. That is, by reducing the simulation accuracy to a certain degree, it is possible to move a robot on the simulator at a high speed. A video image of the simulator 31 may be rendered and displayed on a display, or may only be deployed on the memory. For example, it is also possible to generate a plurality of virtual machines on a cloud server to advance the learning without rendering the video image of the simulator. A neural network 40 is stored in the storage device 30, and is stored as a file in a case of a learned model. The neural network 40 is deployed on a memory of the CPU or the GPU and used in performing inference or learning. A virtual robot arm 32, a first image capturing device 33, a second image capturing device 34, and a workpiece 35 are present on the simulator 31.

FIG. 2 is a block diagram of a physical robot and image capturing devices, and a control device for controlling them. The control device 10, the control unit 20, the storage device 30, and the neural network 40 have the same configuration as those in FIG. 1. FIG. 2 illustrates a state in which the control device 10 is connected to a physical robot arm 50, a first image capturing device 60, and a second image capturing device 70 via an interface such as a universal serial bus (USB) or a local area network (LAN).

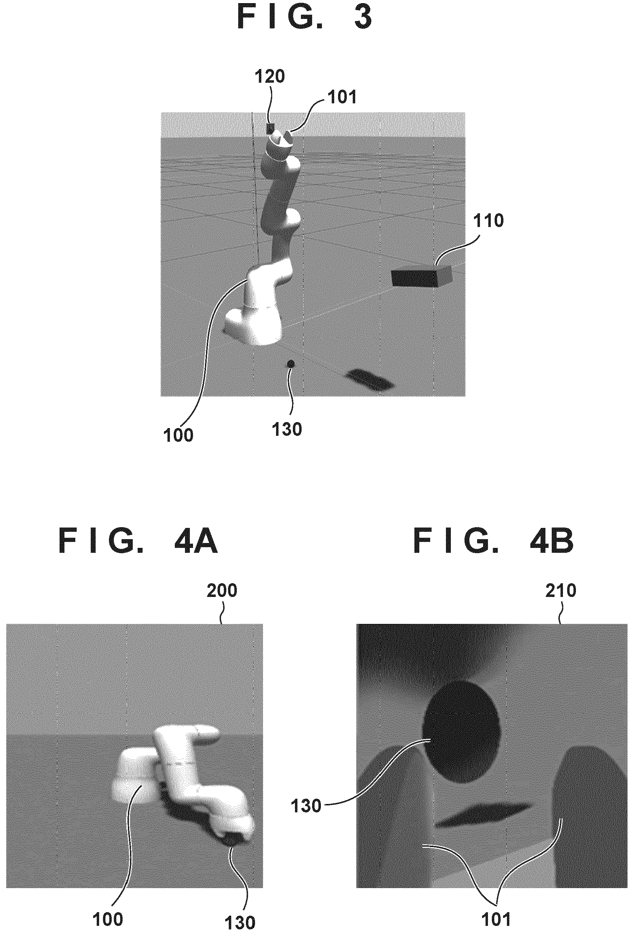

FIG. 3 is a schematic view illustrating a configuration of a robot on a simulator or a physical robot. When FIG. 3 is seen as a configuration diagram of a robot on a simulator, it is to be understood that a robot arm 100, a first image capturing device 110, and a second image capturing device 120 that are illustrated correspond to the robot arm 32, the first image capturing device 33, and the second image capturing device 34 in FIG. 1.

In addition, when FIG. 3 is seen as a configuration diagram of a physical robot, it is to be understood that the robot arm 100, the first image capturing device 110, and the second image capturing device 120 correspond to the robot arm 50, the first image capturing device 60, and the second image capturing device 70 in FIG. 2.

Also, the actual robot 100 is a robot that operates by an articulated structure and a servo motor, and includes an arm. A gripper 101 for gripping a target object is attached to the robot arm. Note that a specific configuration of the robot arm 100 and the gripper 101 is well known to those skilled in the art, and thus detailed description thereof will be omitted.

Further, the first image capturing device 110 and the second image capturing device 120 are cameras that can acquire a color image configured by respective two-dimensional RGB components, but distance information other than RGB or the like may also be included. A workpiece 130 is a target object that is gripped by the robot arm 100, and it is possible to acquire positional coordinates on the simulator, and to arbitrarily specify an arrangement position.

FIG. 4A and FIG. 4B are examples of images captured by the first image capturing device 110 and the second image capturing device 120. An image 200 in FIG. 4A is an example of an image captured by the first image capturing device 110. In order to acquire this image 200, the first image capturing device 110 is installed at a position independent of movement of a movable part of the robot arm 100 such that the entire workpiece 130 and a part of or the entire robot arm 100 enter an angle of view, and are not affected by the movement of the robot arm 100. An image 210 in FIG. 4B is always used in order to observe a state in which a part of the gripper 101 grips the workpiece 130. Thus, the second image capturing device 120 is installed at a predetermined position (or predetermined portion) of the robot arm 100. Here, the second image capturing device 120 is installed on the movable part of the robot arm 100 and the second image capturing device 120 also moves in response to the movement of the robot arm 100. Note that the robot arm 100, the first image capturing device 110, the second image capturing device 120, and the workpiece 130 that have been described above can be reproduced on the simulator in a configuration that is close to that of a real object. Note that by using a robot operating system (ROS, http://wiki.ros.org/) that is an open source of robotic middleware, the Gazebo (http://gazebosim.org/) that is an open source of a physical simulator, and the like, the robot on the simulator and the real robot can be operated with substantially the same control program.

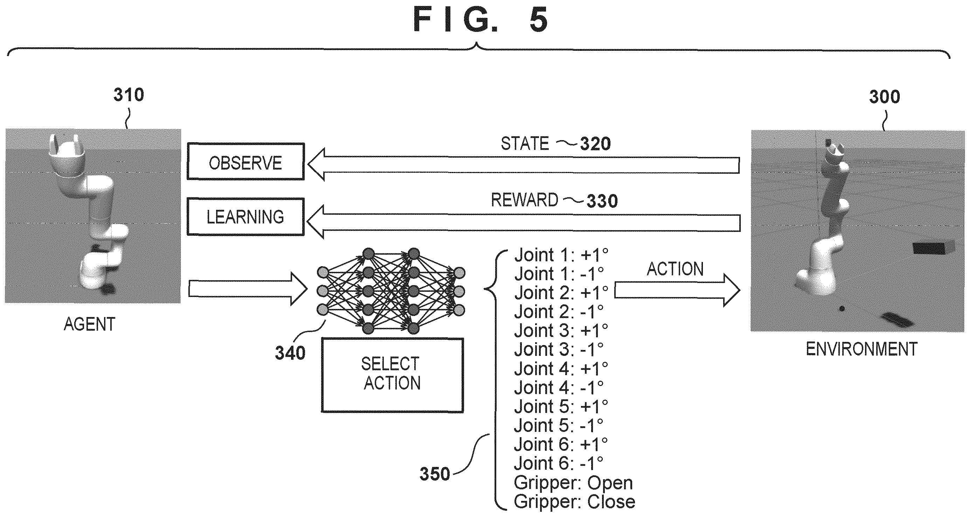

FIG. 5 is a schematic diagram illustrating a process of reinforcement learning which is an algorithm when the robot performs learning in the present embodiment. The reinforcement learning is a type of machine learning that deals with a problem that an agent 310 observes a current state 320 in an environment 300 and determines what action to take. The agent 310 selects the action to obtain a reward 330 from the environment. In the reinforcement learning, a strategy 350 for obtaining the largest reward is learned through a series of actions. In the present embodiment, the neural network 340 is used to perform the reinforcement learning, which is also referred to as deep reinforcement learning. Here, the environment 300 is an actual factory in which the robot arm is installed or a simulator. The agent 310 is a robot arm on the simulator or a physical robot arm. The state 320 is an image captured by the first image capturing device 110 and the second image capturing device 120. For example, the state 320 is the image 200 and the image 210 illustrated in FIG. 4A and FIG. 4B. The reward 330 occurs when conditions are met.

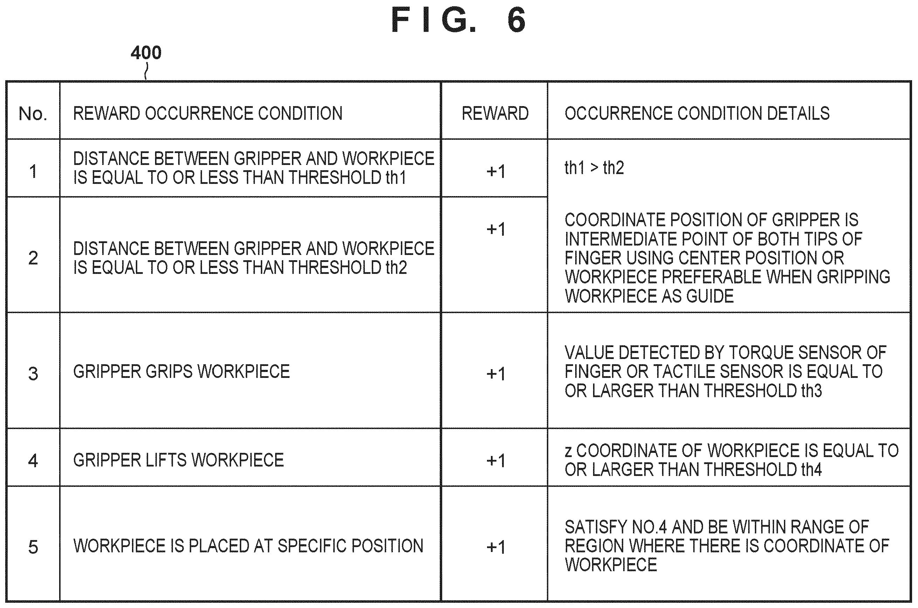

FIG. 6 illustrates a table 400 representing a relationship between an occurrence condition of the reward described above and the reward to be obtained. Note that a coordinate position of the gripper 101 can be determined by forward kinematics even in a case of the actual robot. Work coordinates are available on the simulator. The images 200 and 210 are resized and pre-processed as necessary, and are input to the neural network 340. As the strategy 350, for example, in a case of a six-axis robot with a gripper, 14 times of discrete actions in which each axis is rotated one degree in a positive or negative direction, and the gripper is opened or closed are defined. The strategy 350 that is an output of the neural network 340 is a probability of which action is to be selected from among options of the 14 actions. Based on the probability, the agent determines the action.

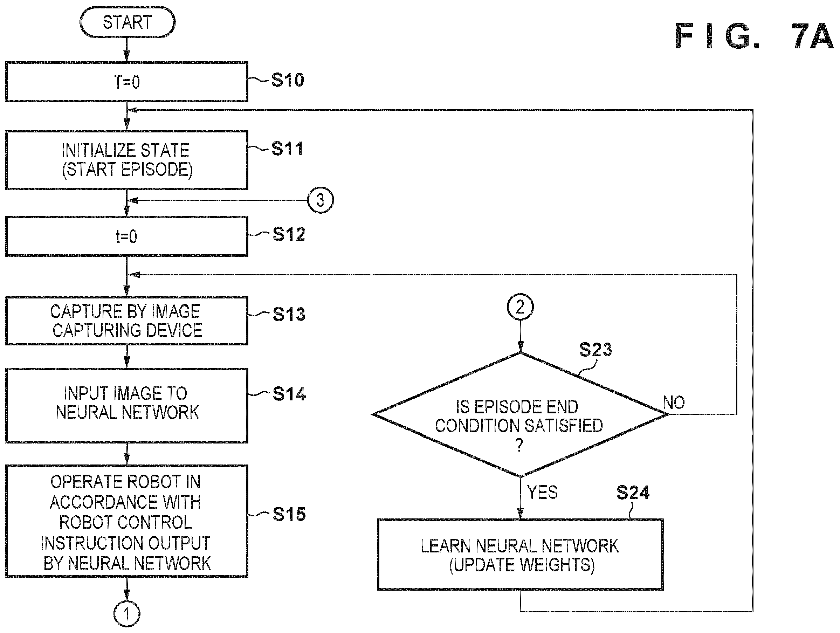

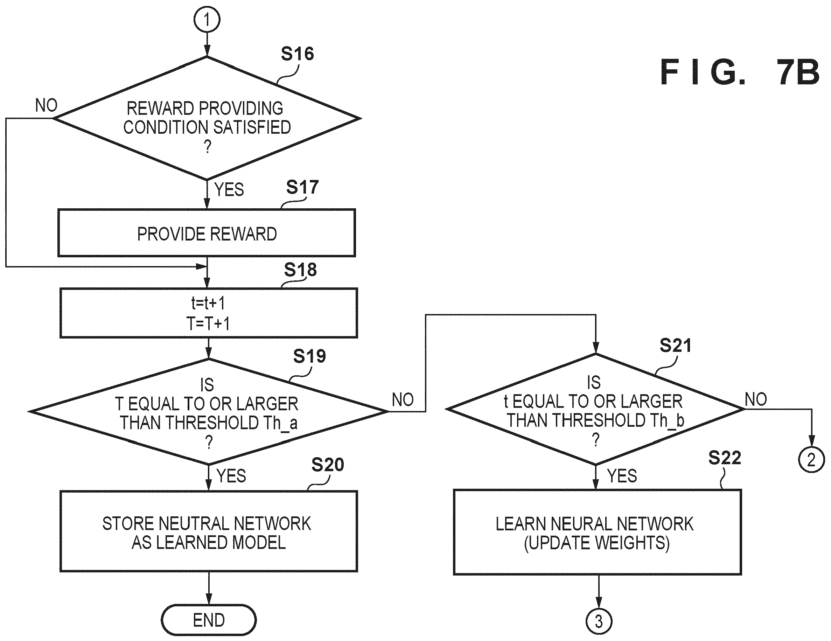

FIGS. 7A and 7B flowcharts illustrating an operation in constructing a learning model.

In S10, the control unit 20 initializes a time T to "0". Next, in S11, the control unit 20 initializes a state and starts an episode. The episode is a unit of a series of processes from the start to the end of a task in reinforcement learning. In the present embodiment, positions of the robot and the workpiece are in an initial state at the start of the episode, and the episode is ended when an episode end condition is satisfied. The episode end condition is such as when the agent succeeds the task, or when an error occurs. The error is, for example, a case where the robot arm collides with itself or a floor, and the like. The specific initialization of the state is to move the robot arm 100 to a predetermined position, to place the workpiece 130 in a predetermined position, and to set an accumulated total of the obtained reward to "0". In this case, the robot arm 100 may be returned to a fixed position, but when the workpiece 130 is randomly disposed within a range where the arm reaches, the neural network can perform the learning so as to be able to take into account the position of the workpiece in the input image and select the action. In S12, the control unit 20 initializes the number of steps t to "0".

In S13, the control unit 20 causes the first image capturing device 110 and the second image capturing device 120 to capture images, and receives the captured images. In S14, the control unit 20 inputs the captured images to the neural network 340. In the inputting, the control unit 20 resizes each captured image into a reduced image having, for example, a pixel size of 84 × 84, or the like. In S15, the control unit 20 operates the robot arm 100 in accordance with a control instruction output by the neural network 340. The control instruction of the robot which is the output of the neural network is an output of a softmax function, and is expressed by a probability of which axis is to be moved. The robot is operated according to the probability. Note that the output of the neural network need not be the control instruction itself, or it may be determined which control instruction to be used based on the output of the neural network. This becomes possible, for example, by holding a table in which the output of the neural network and the control instruction are associated with each other, and the like. In this manner, it is possible to employ various forms as long as the control unit 20 can identify the control instruction based on the output of the neural network.

In S16, the control unit 20 determines whether a reward providing condition (see table 400 in FIG. 6) is satisfied. When it is determined that the condition is satisfied, the control unit 20 advances processing to S17. In S17, the control device 20 provides a reward (updates a reward). As the reward, a score is provided in accordance with the table 400 in FIG. 6. For example, in a case where respective items of No. 1 to 5 in the table 400 are achieved, a total of rewards of "+5" can be finally obtained. In S18, the control unit 20 increments each of the time T and the number of steps t.

In S19, the control unit 20 determines whether or not the time T becomes equal to or larger than a predetermined threshold Th_a. When the time T is equal to or larger than the threshold Th_a, the control unit 20 stores weights of the neural network as the learned model. Here, as the threshold Th_a in S19, a large value such as the eighth power of 10 is specified. Here, it is because since it is unpredictable when the learning is converged, a large value is specified as the threshold to cause a learning loop to be repeated. However, it is also possible to determine that learning has been converged and end the learning.

On the other hand, in a case where the determination result of S19 indicates that the time T is smaller than the threshold Th_a, the control unit 20 advances the processing to S21. In S21, the control unit 20 determines whether or not the number of steps t is equal to or larger than a threshold Th_b. When the number of steps t is equal to or larger than the threshold Th_b, the control unit 20 advances the processing to S22. In this S22, the control device 20 performs learning of a plurality of steps as a batch. The threshold Th_b of the number of steps t is a unit in which the batch learning is performed, and is specified to "20", for example. Thereafter, the control unit 20 returns the processing to S12.

In addition, in a case where the determination result of S21 indicates that the number of steps t is smaller than the threshold Th_b, the control device 20 advances the processing to S23. In S23, the control unit 20 determines whether or not the episode end condition is satisfied. When the control unit 20 determines that the episode end condition is not satisfied, the control unit 20 returns the processing to S13. Further, when it is determined that the episode end condition is satisfied, the control unit 20 advances the processing to S24. In S24, the control unit 20 performs learning of the neural network. A batch size of the learning at this time is the number of steps t. In the learning of the neural network, weighting values are adjusted so as to reduce an error of an output of each perceptron by the technique that is referred to as backpropagation. The details of the learning are omitted, because they have been known.

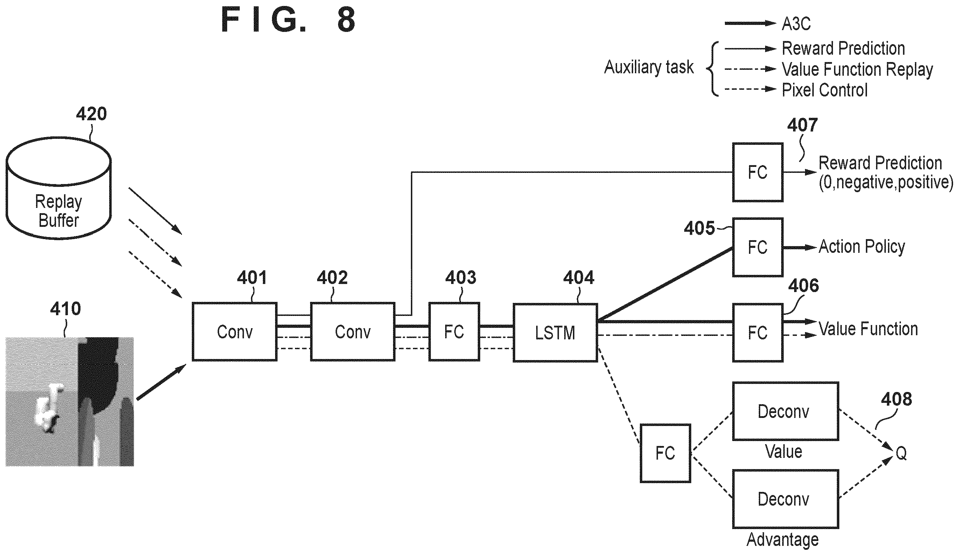

Here, an outline of the configuration of the neural network will be described by using FIG. 8. A model of unsupervised reinforcement and auxiliary learning (UNREAL) proposed in Non-Patent Document 3 is used as a model of the neural network. The details have been described in Non-Patent Document 3, so only an outline will be described. UNREAL is a neural network in which a model that is referred to as asynchronous advantage actor-critic (A3C) proposed in Non-Patent Document 2 is extended. A3C is configured as follows.

Reference signs 401 and 402 denote layers that extract an image feature amount and that are referred to as a convolutional layer, and the layers apply a filter with predetermined parameters to an input image data 410. The predetermined parameters in the filter correspond to weights of the neural network. A reference sign 403 denotes a fully connected layer, and the fully connected layer combines data in which a feature portion has been extracted through the convolutional layer to one node. A long-short term memory (LSTM) with a reference sign 404 is a type of recursive neural network that is referred to as a long short-term memory neural network to learn and retain long-term dependencies between time steps of time series data. A reference 405 denotes a fully connected layer, and its output is converted to a probability by using a softmax function to be served as a strategy. The strategy is a probability of taking any action in a state. A reference sign 406 denotes a fully connected layer, the output is a state value function, and is a predictive value of a reward to be obtained with the state being as a start point. While the A3C configuration has been described above, UNREAL is configured with three auxiliary tasks in addition to A3C. A reference sign 420 denotes a replay buffer, which holds the latest several number of steps of images, rewards, and actions. Inputs of the three auxiliary tasks are an image obtained from the replay buffer 420.

One of the ancillary tasks is reward prediction 407, which estimates an immediate reward from past information that a reward has been obtained. Generally, reinforcement learning has the so-called sparse reward problem that the agent can perform learning only from an experience that can obtain a reward, and thus a reward can be obtained only when the task is successful. For example, in the present embodiment as well, a reward cannot be obtained even when the robot arm 100 is operated one step from the initial state. By using the task of the reward prediction in such an environment, an event for which a reward arbitrarily occurs is retrieved from the replay buffer, and is generated. The second one of the ancillary tasks is value function replay, and has the same function as the output of the fully connected layer 406, and an input image is input from the replay buffer. Then, the third one is pixel control 408, and learns an action that operates such that an input image largely changes. The output is an action value function, and estimates a change amount of a pixel after the action is taken.

The input image 410 in FIG. 8 is a combined image of two images captured by the first image capturing device 110 and the second image capturing device 120, and it is illustrated that the combined image is input to one convolutional layer 401 which is an input layer.

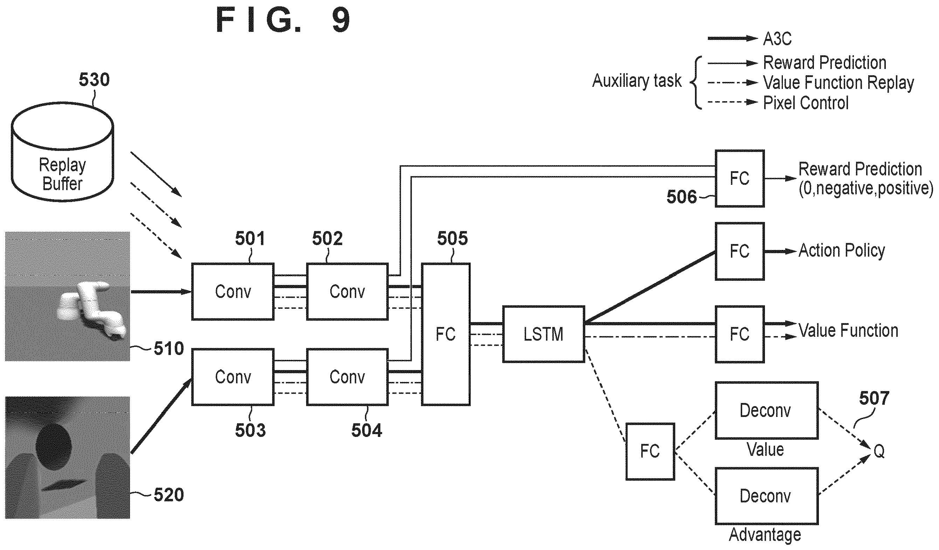

FIG. 9 illustrates an example which is not part of the present invention in which images captured and obtained by the first image capturing device 110 and the second image capturing device 120 are respectively input to convolutional layers 501 and 503 as input images 510 and 520. Then, outputs of convolutional layers 502 and 504 are combined at a fully connected layer 505. An input/output size of the fully combined layer 505 is twice that of the fully connected layer 403. An input size of a fully connected layer 506 for an output of reward prediction is twice that of the fully connected layer 407, and what outputs of the convolutional layers 502 and 504 are combined is input to the fully connected layer 506. Pixel control 507 is a task of estimating a change amount of the input image 520. This is because a change in pixel of the input image 520 is considered to be related to success of the task because the pixel control has a feature of selecting an action such that a pixel value of the input image becomes large, and when a workpiece enters in an angle of view of a video image by the second image capturing device, the task comes close to success. Note that the task can also be learned in both of the neural networks in FIG. 8 and FIG. 9. In addition, the model is merely an example, and other configurations may be used as long as a model has an input of an image and an output of a control instruction for the robot.

In the manner described above, the features of the input data are learned and a learning model for estimating a control instruction for the robot arm from the input is recursively obtained.

The present first embodiment applies the learned model of the neural network that has been learned on the simulator to the actual robot.

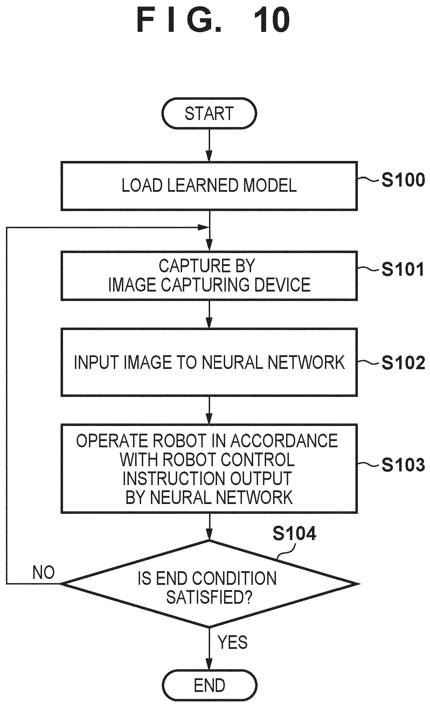

FIG. 10 is a flowchart when the learned model is loaded to control the actual robot.

In S100, the control unit 20 loads the learned model that has been stored in S20 in FIG. 7A. In S101, the control unit 20 causes images to be captured by the physical first image capturing device 60 and second image capturing device 70. In S102, the control unit 20 inputs the captured images obtained by image-capturing to the neural network 340. Then, in S103, the control unit 20 operates the physical robot arm 50 in accordance with the robot control instruction output by the neural network 340. In S104, the control unit 20 determines whether or not the end condition is satisfied. When it is determined as NO, the control unit 20 returns the processing to S101. An example of the end condition is a case in which whether or not there is a workpiece on a belt conveyor or in a box where a workpiece on which picking is to be performed is disposed is checked by a recognition technique such as computer vision, and there is no workpiece. However, the end condition may be other than this.

In the present first embodiment, the model learned by the simulator has been applied as it is to the actual machine, but an appearance of a video image on the simulator and an appearance of a video image in the real world are not completely the same in terms of a way of receiving light, texture of an object, or the like. Thus, even when an image in the real world is input to the neural network 340 in S102, an expected control instruction may not be output. In a method referred to as domain randomization in Non-Patent Document 5, by changing parameters such as a background, texture of a workpiece, a position of a light source, brightness, colors, a position of a camera, and noise, in a wide variety of variations when learning is performed on a simulator, a robust generalized neural network adaptive to a video image in the real world can be constructed. In a case of the present first embodiment, a model of the neural network can be constructed that reduces appearance gaps between video images on the simulator and in the real world, for example, by randomly changing these parameters for each episode and changing an appearance of an environment.

According to the operations described above, it is possible to control the robot control by simply inputting only a video image obtained by combining respective video images captured by two two-dimensional image capturing devices to the neural network.

Here, by using a technique that is referred to as Grad-CAM (Non-Patent Document 4) which indicates where the convolutional layer of the neural network has an interest in an image, it is possible to visualize where the neural network has an interest in the image to make a determination. Deep learning typically has a black box inside the neural network and is not easily analyzed. Also, even when a task is successful/unsuccessful, it is difficult to understand why the task is successful/unsuccessful. Therefore, it is very important to visualize a point of interest (or a region of interest) of the neural network. Generally, the convolutional layer retains spatial information, which is lost in the fully connected layer. Then, information of the last layer among the convolutional layers is used in Grad-CAM to create a heat map, since more abstracted information is held as the stage goes further to the rear side in the convolutional layers. As the details are described in Non-Patent Document 4, description thereof will be omitted, but a method of applying Grad-CAM to the neural network, the method used in the present embodiment, will be briefly described.

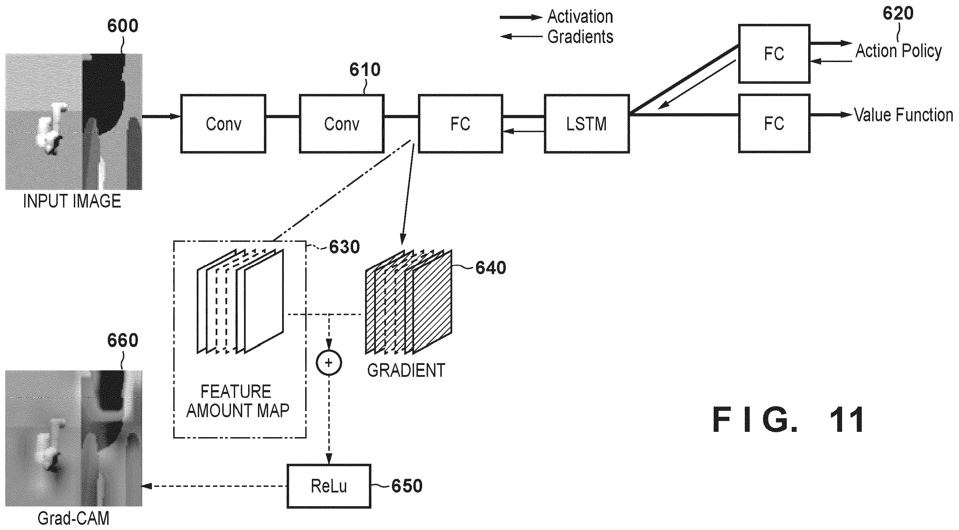

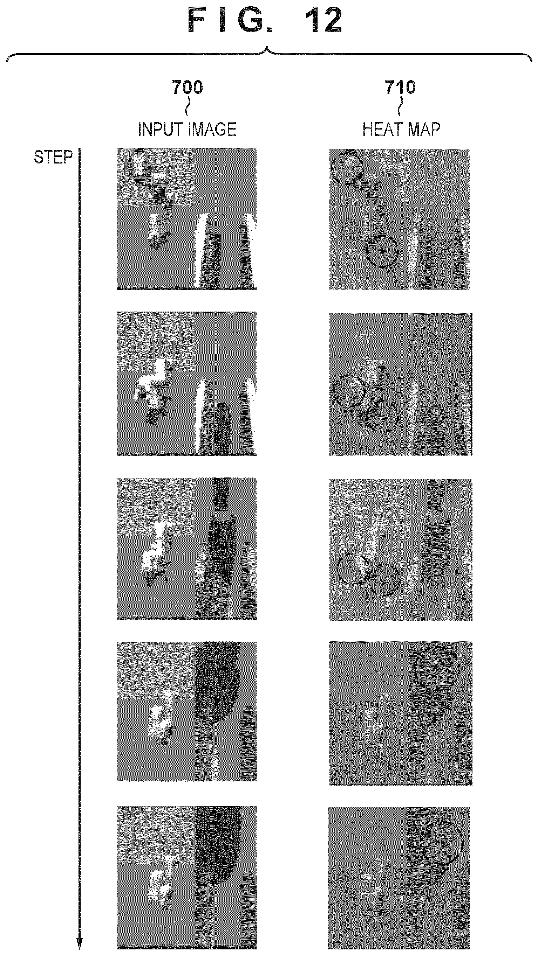

FIG. 11 is a diagram illustrating a method of creating a heat map. When a heat map is created based on the neural network in FIG. 8, after the strategy is output from the neural network, one hot vector in which an action that is actually adopted is set to 1, and other actions are set to zero is created and backpropagation is performed. The backpropagation is performed up to a convolutional layer 610 to calculate a gradient 640. An output of the convolutional layer 610 with respect to an input image 600 is a feature amount map 630, and products of the number of combinations of the feature amount map 630 and the gradient 640 are calculated, added, and passed through an activation function 650 to create a heat map 660. FIG. 12 is a diagram illustrating an example of a heat map for each step. A dotted-line circle represents a region that receives an interest in the heat map. When a heat map 710 with respect to an input image 700 is seen, in the initial steps among the steps, the arm tip and the workpiece receive an interest in the video image by the first image capturing device 110. In the latter steps, it can be seen that when the workpiece enters the angle of view of the second image capturing device 120, the workpiece in the video image by the second image capturing device 120 receives an interest. From this, it can be seen that an action is selected mainly from the video image by the first image capturing device 110 until the arm approaches the workpiece, and an action is selected from the video image by the second image capturing device 120 until the workpiece is gripped after the arm approaches the workpiece, and it can be said that the robot arm takes the intended action.

### Second Embodiment

Next, the second embodiment will be described. Note that, in the second embodiment and the first embodiment, the basic configuration and operation are common, and thus redundant descriptions of these points will be omitted. In the second embodiment, learning of a neural network also utilizes an actual machine. Thus, domain randomization required for learning on the simulator is not required. Also regarding a reward, on the simulator, a distance between a workpiece and an end effector is easily determined, but while in reality, an absolute position of the end effector is determined based on kinematics, a position of the workpiece cannot be mechanically determined, so the workpiece is manually placed, and an operation such as inputting the position is required. This is similar when fine tuning is performed in an actual machine in the first embodiment.

According to the operations described above, it is possible to control the robot control by simply inputting only a video image obtained by combining respective video images captured by two two-dimensional image capturing devices to the neural network.

### Other Examples

In the embodiment described above, the so-called picking operation in which the robot arm moves to grip a workpiece has been described. In examples which are not part of the present invention, a different working device can be attached to the tip of the robot arm, for example, to be applied to welding, measuring, testing, surgery, and the like.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the invention is defined by the appended claims.

## Claims

1. A robot control system, comprising:
a first image capturing device (33; 60; 110);
a second image capturing device (34; 70; 120) different from the first image capturing device (33; 60; 110); and
a robot control device (10) configured to control a robot having a robot arm (32; 50; 100) with a gripper (101) for gripping an object (130) to perform a predetermined operation;
wherein the first image capturing device is disposed at a position independent of movement of a movable part of the robot arm such that the entire object and at least a part of the robot arm are within an angle of view and are not affected by the movement of the robot arm;
wherein the second image capturing device is mounted on the movable part of the robot arm to capture an image in order to observe a state of gripping of the object by the gripper;
the robot control device comprising
a storage device (30) configured to store a neural network (40);
an acquisition means (S101) for acquiring a plurality of images captured by a plurality of image capturing devices including the first image capturing device and the second image capturing device;
a specification means (S102) for using one combined image obtained by combining respective video images captured by the first image capturing device and the second image capturing device as input to the neural network, and for specifying a control instruction for the robot based on an output of the neural network,
wherein an input layer of the neural network is configured with a single layer configured to extract an image feature amount from the one combined image,
wherein the neural network is configured as a model of unsupervised reinforcement and auxiliary learning (UNREAL) extending an asynchronous advantage actor-critic (A3C) model,
wherein the neural network comprises a replay buffer (420) configured to hold a latest several number of steps of images, rewards, and actions,
wherein the neural network is configured with three auxiliary tasks including reward prediction (407), value function replay, and pixel control (408), and
wherein inputs of the three auxiliary tasks are an image obtained from the replay buffer (420).

2. The robot control system according to claim 1, wherein
the first image capturing device (33; 60; 110) is disposed at a position independent of the robot to capture an image including the entire object (130) and the entire robot.

3. The robot control system according to claim 1 or 2, wherein
the robot control device (10) is configured to control the robot so that the robot arm moves from an initial state to grip the object (130) with the gripper (101).

4. The robot control system according to any one of claims 1 to 3, wherein
the robot control device (10) is configured to control the robot in accordance with the control instruction for the robot obtained by the neural network (40; 340).

5. The robot control system according to any one of claims 1 to 4, wherein
the second image capturing device is attached to a tip of the robot arm.

6. The robot control system according to any one of claims 1 to 5, wherein
the neural network (40; 340) includes a means configured to visualize a region of interest in an image.

7. A method of controlling a robot , the robot having a robot arm with a gripper (101) for gripping an object (130) to perform a predetermined operation, the method comprising:
acquiring a plurality of images captured by a plurality of image capturing devices including a first image capturing device (33; 60; 110) and a second image capturing device (34; 70; 120) different from the first image capturing device, wherein the first image capturing device is disposed at a position independent of movement of a movable part of the robot arm such that the entire object and at least a part of the robot arm are within an angle of view and are not affected by the movement of the robot arm and the second image capturing device is mounted on the movable part of the robot arm to capture an image in order to observe a state of gripping of the object by the gripper; and
using one combined image obtained by combining respective video images captured by the first image capturing device and the second image capturing device as input to a neural network (40; 340), and specifying a control instruction for the robot based on an output of the neural network,
wherein an input layer of the neural network is configured with a single layer configured to extract an image feature amount from the one combined image,
wherein the neural network is configured as a model of unsupervised reinforcement and auxiliary learning (UNREAL) extending an asynchronous advantage actor-critic (A3C) model,
wherein the neural network comprises a replay buffer (420) configured to hold a latest several number of steps of images, rewards, and actions,
wherein the neural network is configured with three auxiliary tasks including reward prediction (407), value function replay, and pixel control (408), and
wherein inputs of the three auxiliary tasks are an image obtained from the replay buffer (420).

8. A computer program which, when read and executed by a computer, causes the computer to execute the steps of a method of controlling a robot, the robot having a robot arm with a gripper (101) for gripping an object (130) to perform a predetermined operation, the method comprising:
acquiring a plurality of images captured by a plurality of image capturing devices including a first image capturing device (33; 60; 110) and a second image capturing device (34; 70; 120) different from the first image capturing device, wherein the first image capturing device is disposed at a position independent of movement of a movable part of the robot arm such that the entire object and at least a part of the robot arm are within an angle of view and are not affected by the movement of the robot arm and the second image capturing device is mounted on the movable part of the robot arm to capture an image in order to observe a state of gripping of the object by the gripper; and
using one combined image obtained by combining respective video images captured by the first image capturing device and the second image capturing device as input to a neural network (40; 340), and specifying a control instruction for the robot based on an output of the neural network,
wherein an input layer of the neural network is configured with a single layer configured to extract an image feature amount from the one combined image,
wherein the neural network is configured as a model of unsupervised reinforcement and auxiliary learning (UNREAL) extending an asynchronous advantage actor-critic (A3C) model,
wherein the neural network comprises a replay buffer (420) configured to hold a latest several number of steps of images, rewards, and actions,
wherein the neural network is configured with three auxiliary tasks including reward prediction (407), value function replay, and pixel control (408), and
wherein inputs of the three auxiliary tasks are an image obtained from the replay buffer (420).

## Patentansprüche

1. Robotersteuerungssystem, mit:
einer ersten Bildaufnahmeeinrichtung (33; 60; 110);
einer zweiten Bildaufnahmeeinrichtung (34; 70; 120), die von der ersten Bildaufnahmeeinrichtung (33; 60; 110) verschieden ist; und
einer Robotersteuerungseinrichtung (10), die dazu konfiguriert ist, einen Roboter mit einem Roboterarm (32; 50; 100) mit einem Greifer (101) zum Greifen eines Objekts (130), um eine vorbestimmte Operation durchzuführen, zu steuern;
wobei die erste Bildaufnahmeeinrichtung an einer Position angeordnet ist, die von einer Bewegung eines beweglichen Teils des Roboterarms unabhängig ist, sodass das gesamte Objekt und zumindest ein Teil des Roboterarms innerhalb eines Blickwinkels sind und durch die Bewegung des Roboterarms nicht beeinträchtigt werden;
wobei die zweite Bildaufnahmeeinrichtung an dem beweglichen Teil des Roboterarms angebracht ist, um ein Bild aufzunehmen, um einen Zustand des Greifens des Objekts durch den Greifer zu beobachten;
wobei die Robotersteuerungseinrichtung aufweist
eine Speichereinrichtung (30), die dazu konfiguriert ist, ein neuronales Netzwerk (40) zu speichern;
eine Beschaffungseinrichtung (S101) zum Beschaffen einer Vielzahl von Bildern, die durch eine Vielzahl von Bildaufnahmeeinrichtungen inklusive der ersten Bildaufnahmeeinrichtung und der zweiten Bildaufnahmeeinrichtung aufgenommen werden;
einer Spezifizierungseinrichtung (S102) zum Verwenden eines kombinierten Bildes, das durch Kombinieren von entsprechenden Videobildern, die durch die erste Bildaufnahmeeinrichtung und die zweite Bildaufnahmeeinrichtung aufgenommen werden, als Eingabe in das neuronale Netzwerk, und zum Spezifizieren einer Steuerungsanweisung für den Roboter basierend auf einer Ausgabe des neuronalen Netzwerks,
wobei eine Eingabeschicht des neuronalen Netzwerks mit einer einzelnen Schicht konfiguriert ist, die dazu konfiguriert ist, einen Bildmerkmalsbetrag von dem einen kombinierten Bild zu extrahieren,
wobei das neuronale Netzwerk als ein Modell eines unüberwachten Verstärkungs- und Hilfslernens (UNREAL), das ein asynchrones Advantage-Actor-Critic-Modell (A3C) erweitert, konfiguriert ist,
wobei das neuronale Netzwerk einen Wiedergabepuffer (420) aufweist, der dazu konfiguriert ist, letzte mehrere Schritte von Bildern, Belohnungen und Aktionen zu speichern, und
wobei das neuronale Netzwerk mit drei Hilfsaufgaben konfiguriert ist, die eine Belohnungsvorhersage (407), eine Wertefunktionswiedergabe und eine Pixelsteuerung (408) umfassen, und
wobei Eingaben der drei Hilfsaufgaben ein Bild sind, das von dem Wiedergabepuffer (420) erhalten wird.

2. Robotersteuerungssystem gemäß Anspruch 1, wobei
die erste Bildaufnahmeeinrichtung (33; 60; 110) an einer Position unabhängig von dem Roboter angebracht ist, um ein Bild aufzunehmen, das das gesamte Objekt (130) und den gesamten Roboter umfasst.

3. Robotersteuerungssystem gemäß Anspruch 1 oder 2, wobei
die Robotersteuerungseinrichtung (10) dazu konfiguriert ist, den Roboter zu steuern, sodass sich der Roboterarm von einem Anfangszustand bewegt, um das Objekt (130) mit dem Greifer (101) zu greifen.

4. Robotersteuerungssystem gemäß einem der Ansprüche 1 bis 3, wobei
die Robotersteuerungseinrichtung (10) dazu konfiguriert ist, den Roboter gemäß der Steuerungsanweisung für den Roboter, die durch das neuronale Netzwerk (40; 340) erhalten wird, zu steuern.

5. Robotersteuerungssystem gemäß einem der Ansprüche 1 bis 4, wobei
die zweite Bildaufnahmeeinrichtung an einer Spitze des Roboterarms angebracht ist.

6. Robotersteuerungssystem gemäß einem der Ansprüche 1 bis 5, wobei
das neuronale Netzwerk (40; 340) eine Einrichtung umfasst, die dazu konfiguriert ist, eine Region von Interesse in einem Bild zu visualisieren.

7. Verfahren des Steuerns eines Roboters, wobei der Roboter einen Roboterarm mit einem Greifer (101) zum Greifen eines Objekts (130) aufweist, um eine vorbestimmte Operation durchzuführen, wobei das Verfahren aufweist:
Beschaffen einer Vielzahl von Bildern, die durch eine Vielzahl von Bildaufnahmeeinrichtungen inklusive einer ersten Bildaufnahmeeinrichtung (33; 60; 110) und einer zweiten Bildaufnahmeeinrichtung (34; 70; 120), die von der ersten Bildaufnahmeeinrichtung verschieden ist, aufgenommen werden, wobei die erste Bildaufnahmeeinrichtung an einer Position unabhängig von einer Bewegung eines beweglichen Teils des Roboterarms angeordnet ist, sodass das gesamte Objekt und zumindest ein Teil des Roboterarms innerhalb eines Blickwinkels sind und durch die Bewegung des Roboterarms nicht beeinträchtigt werden, und die zweite Bildaufnahmeeinrichtung an dem beweglichen Teil des Roboterarms angebracht ist, um ein Bild aufzunehmen, um einen Zustand des Greifens des Objekts durch den Greifer zu beobachten; und
Verwenden eines kombinierten Bildes, das durch Kombinieren von entsprechenden Videobildern, die durch die erste Bildaufnahmeeinrichtung und die zweite Bildaufnahmeeinrichtung aufgenommen werden, erhalten wird, als Eingabe in ein neuronales Netzwerk (40; 340) und Spezifizieren einer Steuerungsanweisung für den Roboter basierend auf einer Ausgabe des neuronalen Netzwerks,
wobei eine Eingabeschicht des neuronalen Netzwerks mit einer einzelnen Schicht konfiguriert ist, die dazu konfiguriert ist, einen Bildmerkmalsbetrag von dem einen kombinierten Bild zu extrahieren,
wobei das neuronale Netzwerk als ein Modell eines unüberwachten Verstärkungs- und Hilfslernens (UNREAL), das ein asynchrones Advantage-Actor-Critic-Modell (A3C) erweitert, konfiguriert ist,
wobei das neuronale Netzwerk einen Wiedergabepuffer (420) aufweist, der dazu konfiguriert ist, letzte mehrere Schritte von Bildern, Belohnungen und Aktionen zu speichern,
wobei das neuronale Netzwerk mit drei Hilfsaufgaben konfiguriert ist, die eine Belohnungsvorhersage (407), eine Wertefunktionswiedergabe und eine Pixelsteuerung (408) umfassen, und
wobei Eingaben der drei Hilfsaufgaben ein Bild sind, das von dem Wiedergabepuffer (420) erhalten wird.

8. Programm, das, wenn es durch einen Computer gelesen und ausgeführt wird, den Computer veranlasst, die Schritte eines Verfahrens des Steuerns eines Roboters auszuführen, wobei der Roboter einen Roboterarm mit einem Greifer (101) zum Greifen eines Objekts (120) umfasst, um eine vorbestimmte Operation durchzuführen, wobei das Verfahren aufweist:
Beschaffen einer Vielzahl von Bildern, die durch eine Vielzahl von Bildaufnahmeeinrichtungen inklusive einer ersten Bildaufnahmeeinrichtung (33; 60; 110) und einer zweiten Bildaufnahmeeinrichtung (34; 70; 120), die von der ersten Bildaufnahmeeinrichtung verschieden ist, aufgenommen werden, wobei die erste Bildaufnahmeeinrichtung an einer Position unabhängig von einer Bewegung eines beweglichen Teils des Roboterarms angeordnet ist, sodass das gesamte Objekt und zumindest ein Teil des Roboterarms innerhalb eines Blickwinkels sind und durch die Bewegung des Roboterarms nicht beeinträchtigt werden, und die zweite Bildaufnahmeeinrichtung an dem beweglichen Teil des Roboterarms angebracht ist, um ein Bild aufzunehmen, um einen Zustand des Greifens des Objekts durch den Greifer zu beobachten; und
Verwenden eines kombinierten Bildes, das durch Kombinieren von entsprechenden Videobildern, die durch die erste Bildaufnahmeeinrichtung und die zweite Bildaufnahmeeinrichtung aufgenommen werden, erhalten wird, als Eingabe in ein neuronales Netzwerk (40; 340) und Spezifizieren einer Steuerungsanweisung für den Roboter basierend auf einer Ausgabe des neuronalen Netzwerks,
wobei eine Eingabeschicht des neuronalen Netzwerks mit einer einzelnen Schicht konfiguriert ist, die dazu konfiguriert ist, einen Bildmerkmalsbetrag von dem einen kombinierten Bild zu extrahieren,
wobei das neuronale Netzwerk als ein Modell eines unüberwachten Verstärkungs- und Hilfslernens (UNREAL), das ein asynchrones Advantage-Actor-Critic-Modell (A3C) erweitert, konfiguriert ist,
wobei das neuronale Netzwerk einen Wiedergabepuffer (420) aufweist, der dazu konfiguriert ist, letzte mehrere Schritte von Bildern, Belohnungen und Aktionen zu speichern,
wobei das neuronale Netzwerk mit drei Hilfsaufgaben konfiguriert ist, die eine Belohnungsvorhersage (407), eine Wertefunktionswiedergabe und eine Pixelsteuerung (408) umfassen, und
wobei Eingaben der drei Hilfsaufgaben ein Bild sind, das von dem Wiedergabepuffer (420) erhalten wird.

## Revendications

1. Système de commande de robot, comprenant :
un premier dispositif de capture d'image (33 ; 60 ; 110) ;
un deuxième dispositif de capture d'image (34 ; 70 ; 120) différent du premier dispositif de capture d'image (33 ; 60 ; 110) ; et
un dispositif de commande de robot (10) configuré pour commander un robot présentant un bras de robot (32 ; 50 ; 100) avec un dispositif de préhension (101) pour saisir un objet (130) afin de réaliser une opération prédéterminée ; dans lequel le premier dispositif de capture d'image est disposé à une position indépendante du mouvement d'une partie mobile du bras de robot de sorte que l'ensemble de l'objet et au moins une partie du bras de robot se trouvent dans un angle de vue et ne soient pas affectés par le mouvement du bras de robot ;
dans lequel le deuxième dispositif de capture d'image est monté sur la partie mobile du bras de robot pour capturer une image afin d'observer un état de préhension de l'objet par le dispositif de préhension ;
le dispositif de commande de robot comprenant un dispositif de stockage (30) configuré pour stocker un réseau neuronal (40) ;
un moyen d'acquisition (S101) pour acquérir une pluralité d'images capturées par une pluralité de dispositifs de capture d'image comportant le premier dispositif de capture d'image et le deuxième dispositif de capture d'image ; et
un moyen de spécification (S102) pour utiliser une image combinée obtenue en combinant des images vidéo respectives capturées par le premier dispositif de capture d'image et le deuxième dispositif de capture d'image en tant qu'entrée du réseau neuronal, et pour spécifier une instruction de commande pour le robot sur la base d'une sortie du réseau neuronal,
dans lequel une couche d'entrée du réseau neuronal est configurée avec une couche unique configurée pour extraire une quantité de caractéristiques d'image à partir de l'image combinée,
dans lequel le réseau neuronal est configuré comme un modèle UNsupervised REinforcement and Auxiliary Learning (UNREAL) étendant un modèle Asynchronous Advantage Actor-Critic (A3C),
dans lequel le réseau neuronal comprend un tampon de relecture (420) configuré pour contenir un certain nombre le plus récent d'étapes d'images, de récompenses et d'actions,
dans lequel le réseau neuronal est configuré avec trois tâches auxiliaires comportant une prédiction de récompense (407), une relecture de fonction de valeur et une commande de pixel (408), et dans lequel des entrées des trois tâches auxiliaires sont une image obtenue à partir du tampon de relecture (420).

2. Système de commande de robot selon la revendication 1, dans lequel
le premier dispositif de capture d'image (33 ; 60 ; 110) est disposé à une position indépendante du robot pour capturer une image comportant l'ensemble de l'objet (130) et l'ensemble du robot.

3. Système de commande de robot selon la revendication 1 ou 2, dans lequel
le dispositif de commande de robot (10) est configuré pour commander le robot de sorte que le bras de robot se déplace à partir d'un état initial pour saisir l'objet (130) avec le dispositif de préhension (101).

4. Système de commande de robot selon l'une quelconque des revendications 1 à 3, dans lequel
le dispositif de commande de robot (10) est configuré pour commander le robot conformément à l'instruction de commande pour le robot obtenue par le réseau neuronal (40 ; 340).

5. Système de commande de robot selon l'une quelconque des revendications 1 à 4, dans lequel
le deuxième dispositif de capture d'image est fixé à une extrémité du bras de robot.

6. Système de commande de robot selon l'une quelconque des revendications 1 à 5, dans lequel
le réseau neuronal (40 ; 340) comporte un moyen configuré pour visualiser une région d'intérêt dans une image.

7. Procédé de commande d'un robot, le robot présentant un bras robot avec un dispositif de préhension (101) pour saisir un objet (130) afin de réaliser une opération prédéterminée, le procédé comprenant :
l'acquisition d'une pluralité d'images capturées par une pluralité de dispositifs de capture d'image comportant un premier dispositif de capture d'image (33 ; 60 ; 110) et un deuxième dispositif de capture d'image (34 ; 70 ; 120) différent du premier dispositif de capture d'image, dans lequel le premier dispositif de capture d'image est disposé à une position indépendante du mouvement d'une partie mobile du bras de robot de sorte que l'ensemble de l'objet et au moins une partie du bras de robot se trouvent dans un angle de vue et ne soient pas affectés par le mouvement du bras de robot et le deuxième dispositif de capture d'image est monté sur la partie mobile du bras de robot pour capturer une image afin d'observer un état de préhension de l'objet par le dispositif de préhension ; et
l'utilisation d'une image combinée obtenue en combinant des images vidéo respectives capturées par le premier dispositif de capture d'image et le deuxième dispositif de capture d'image en tant qu'entrée d'un réseau neuronal (40 ; 340), et la spécification d'une instruction de commande pour le robot sur la base d'une sortie du réseau neuronal,
dans lequel une couche d'entrée du réseau neuronal est configurée avec une couche unique configurée pour extraire une quantité de caractéristiques d'image à partir de l'image combinée,
dans lequel le réseau neuronal est configuré comme un modèle UNsupervised REinforcement and Auxiliary Learning (UNREAL) étendant un modèle Asynchronous Advantage Actor-Critic (A3C),
dans lequel le réseau neuronal comprend un tampon de relecture (420) configuré pour contenir un certain nombre le plus récent d'étapes d'images, de récompenses et d'actions,
dans lequel le réseau neuronal est configuré avec trois tâches auxiliaires comportant une prédiction de récompense (407), une relecture de fonction de valeur et une commande de pixel (408), et dans lequel des entrées des trois tâches auxiliaires sont une image obtenue à partir du tampon de relecture (420).

8. Programme informatique qui, lorsqu'il est lu et exécuté par un ordinateur, amène l'ordinateur à exécuter les étapes d'un procédé de commande d'un robot, le robot présentant un bras de robot avec un dispositif de préhension (101) pour saisir un objet (130) afin de réaliser une opération prédéterminée, le procédé comprenant :
l'acquisition d'une pluralité d'images capturées par une pluralité de dispositifs de capture d'image comportant un premier dispositif de capture d'image (33 ; 60 ; 110) et un deuxième dispositif de capture d'image (34 ; 70 ; 120) différent du premier dispositif de capture d'image, dans lequel le premier dispositif de capture d'image est disposé à une position indépendante du mouvement d'une partie mobile du bras de robot de sorte que l'ensemble de l'objet et au moins une partie du bras de robot se trouvent dans un angle de vue et ne soient pas affectés par le mouvement du bras de robot et le deuxième dispositif de capture d'image est monté sur la partie mobile du bras de robot pour capturer une image afin d'observer un état de préhension de l'objet par le dispositif de préhension ; et
l'utilisation d'une image combinée obtenue en combinant des images vidéo respectives capturées par le premier dispositif de capture d'image et le deuxième dispositif de capture d'image en tant qu'entrée d'un réseau neuronal (40 ; 340), et la spécification d'une instruction de commande pour le robot sur la base d'une sortie du réseau neuronal,
dans lequel une couche d'entrée du réseau neuronal est configurée avec une couche unique configurée pour extraire une quantité de caractéristiques d'image à partir de l'image combinée,
dans lequel le réseau neuronal est configuré comme un modèle UNsupervised REinforcement and Auxiliary Learning (UNREAL) étendant un modèle Asynchronous Advantage Actor-Critic (A3C),
dans lequel le réseau neuronal comprend un tampon de relecture (420) configuré pour contenir un certain nombre le plus récent d'étapes d'images, de récompenses et d'actions,
dans lequel le réseau neuronal est configuré avec trois tâches auxiliaires comportant une prédiction de récompense (407), une relecture de fonction de valeur et une commande de pixel (408), et dans lequel des entrées des trois tâches auxiliaires sont une image obtenue à partir du tampon de relecture (420).
